# EUROPÄISCHE PATENTSCHRIFT

(11) **EP 3 841 634 B1**
(45) Veröffentlichungstag und Bekanntmachung des Hinweises auf die Patenterteilung: **05.10.2022**
(21) Anmeldenummer: 19759304.9
(22) Anmeldetag: 14.08.2019
(51) Int. Cl.: H01M 8/04303

(54) **VERFAHREN ZUR STARTVORBEREITUNG EINES BRENNSTOFFZELLENSYSTEMS**
PROCESS OF PREPARING FOR STARTING A FUEL CELL SYSTEM
PROCÉDÉ DE PRÉPARATION DE LA DÉMARRAGE D'UN SYSTÈME DE PILE À COMBUSTIBLE

(30) Priorität: 21.08.2018 DE 102018006624
(43) Veröffentlichungstag der Anmeldung: 30.06.2021
(73) Patentinhaber: cellcentric GmbH & Co. KG, 73230 Kirchheim unter Teck (DE)
(72) Erfinder: PASTOR NIGORRA, Pere,Antoni, 72074 Tübingen (DE); SCHMALZRIEDT, Sven, 73728 Esslingen (DE); HEIDRICH, Hans-Jörg, 89075 Ulm (DE)
(74) Vertreter: Wallinger Ricker Schlotter Tostmann
(86) Internationale Anmeldenummer: PCT/EP2019/071795
(87) Internationale Veröffentlichungsnummer: WO 2020/038792

(56) Entgegenhaltungen:
- DE-A1-102004 024 117
- DE-A1-102013 017 543

## Beschreibung

Die Erfindung betrifft ein Verfahren zur Startvorbereitung eines Brennstoffzellensystems in einem Fahrzeug, nach der im Oberbegriff von Anspruch 1 näher definierten Art.

Brennstoffzellensysteme sind aus dem allgemeinen Stand der Technik bekannt. Sie können beispielsweise in Fahrzeugen zur Bereitstellung von elektrischer Antriebsleistung eingesetzt werden. Eines der Probleme von Brennstoffzellensystemen liegt dabei in der Entstehung von sehr reinem Wasser in dem Brennstoffzellensystem während des Betriebs. Kommt es nun zu Temperaturen unterhalb des Gefrierpunkts, was insbesondere bei Fahrzeuganwendungen unvermeidbar auftreten wird, dann kann das Brennstoffzellensystem einfrieren und macht bei einem erneuten Startvorgang dann entsprechende Probleme beziehungsweise es benötigt sehr lange, bis das Brennstoffzellensystem gestartet werden kann. Dies liegt daran, dass aufgrund von auskondensierter und gefrorener Feuchtigkeit beispielsweise Gasleitungskanäle und/oder Ventile blockiert und andere Bauteile durch die Eisbildung in ihrer Funktion beeinträchtigt sein können.

Um dieser Problematik entgegenzuwirken ist es aus dem allgemeinen Stand der Technik bekannt, dass zum Vorbereiten eines Brennstoffzellensystems auf einen Startvorgang beim Abschalten des Brennstoffzellensystems eine Startvorbereitungsroutine durchgeführt wird, um Wasser und Feuchtigkeit aus dem Brennstoffzellensystem auszutragen. Typischerweise wird das Brennstoffzellensystem dabei mit Gas gespült, welches beispielsweise durch die Luftfördereinrichtung und/oder ein Wasserstoffrezirkulationsgebläse oder ein andersartiges Gebläse gefördert wird. Hierdurch wird Feuchtigkeit aus dem Brennstoffzellensystem ausgeblasen und eventuelle Wasserabscheider und dergleichen können geleert und durchspült werden, um auch hier möglichst viel Feuchtigkeit auszutragen. Nun ist es so, dass Brennstoffzellensysteme beim Abstellen und dem danach folgenden Abschaltprozess typischerweise noch sehr warm sind, sodass gegebenenfalls Dampf in dem Brennstoffzellensystem verbleibt, welcher später noch auskondensiert, und, sofern die Temperaturen dann unter den Gefrierpunkt fallen, ebenfalls zu den oben beschriebenen Problemen führen kann.

Aus dem weiteren allgemeinen Stand der Technik ist es daher ergänzend oder alternativ zu der oben beschriebenen Startvorbereitungsroutine auch bekannt, eine Startvorbereitungsroutine im Stillstand des Brennstoffzellensystems durchzuführen. Hierfür wird das Brennstoffzellensystem beispielsweise beim Abfall der Umgebungstemperatur unter einen vorgegebenen Grenzwert aufgeweckt, um dann die Startvorbereitungsroutine durchzuführen und das System zu trocknen. Im Gegensatz zum Trocknen unmittelbar nach dem Abstellen des Brennstoffzellensystems hat diese häufig auch als Konditionierung bzw. Stillstandskonditionierung bezeichnete Startvorbereitungsroutine den Vorteil, dass später noch auskondensiertes Wasser mit entfernt werden kann. Deshalb ist es auch durchaus sinnvoll, beide Routinen durchzuführen. Rein beispielhaft kann in diesem Zusammenhang auf die DE 10 2016 116 214 A1 hingewiesen werden.

Die DE 10 2013 017 543 A1 beschreibt die Einteilung des Lastzustandes vor dem Abstellen des Brennstoffzellensystems in verschiedene Klassen und legt die Zeit für die Startvorbereitungsroutine dann anhand dieser Klassen fest, um so beispielsweise bei einem sehr feuchten Betrieb noch stärker zu trocknen als bei einem weniger feuchten Betrieb. Alles in allem ist dies immer noch relativ aufwändig.

Ferner ist aus der DE 10 2012 023 799 A1 ein Verfahren bekannt, bei dem das Brennstoffzellensystem nicht mittels des Durchspülens mit Luft sondern primär per Unterdruck getrocknet wird. Auch dies ist eine von mehreren aus dem Stand der Technik bekannten Möglichkeiten.

Die Aufgabe der hier vorliegenden Erfindung besteht nun darin, ein verbessertes Verfahren zur Startvorbereitung eines Brennstoffzellensystems in einem Fahrzeug anzugeben, welches in jedem Fall eine ausreichende Trocknung des Brennstoffzellensystems gewährleistet.

Erfindungsgemäß wird diese Aufgabe durch ein Verfahren zur Startvorbereitung eines Brennstoffzellensystems in einem Fahrzeug mit den Merkmalen im Anspruch 1, und hier insbesondere im kennzeichnenden Teil des Anspruchs 1 gelöst. Vorteilhafte Ausgestaltungen und Weiterbildungen ergeben sich aus den hiervon abhängigen Unteransprüchen.

Bei dem erfindungsgemäßen Verfahren zur Startvorbereitung ist es so, dass für den Fall, dass die Brennstoffzelle während eines vorhergegangenen Betriebs ihre normale Arbeitstemperatur nicht erreicht hatte, und dass eine aktuelle Temperatur unter den vorgegebenen Temperaturgrenzwert fällt, das Brennstoffzellensystem zuerst betrieben wird, bis es seine normale Arbeitstemperatur erreicht hat, wobei anschließend die Startvorbereitungsroutine durchgeführt wird. Das erfindungsgemäße Verfahren fragt also lediglich Temperaturen ab, was außerordentlich einfach und mit einfachen, robusten und kostengünstigen Sensoren sehr zuverlässig möglich ist. Für den Fall, dass das Brennstoffzellensystem seine normale Arbeitstemperatur im Betrieb erreicht hatte, wird ein herkömmliches Startvorbereitungsverfahren beim Erreichen einer Grenztemperatur gestartet, wie es aus dem Stand der Technik bekannt ist. Hat das Brennstoffzellensystem in dem Fahrzeug seine normale Arbeitstemperatur nicht erreicht, sei es weil es nur über eine Kurzstrecke bewegt worden ist, oder weil die Umgebungstemperatur extrem niedrig war, dann wird beim Erreichen der Grenztemperatur das Brennstoffzellensystem zuerst gestartet. Es wird dann betrieben, bis es seine normale Arbeitstemperatur erreicht hat. Dieser automatische Betrieb des Brennstoffzellensystems im eigentlichen Stillstand des Fahrzeugs sorgt dann dafür, dass mit dem Erreichen der normalen Arbeitstemperatur des Brennstoffzellensystems dieses aus definierten Konditionen heraus abgeschaltet wird, ohne dass mit aufwändiger Sensorik Betriebskonditionen wie Feuchtigkeit und dergleichen erfasst werden müssen. Im Anschluss wird dann die Startvorbereitungsroutine ausgehend vom erneuten Abstellen des Brennstoffzellensystems in diesem automatischen Betrieb, welcher die Normaltemperatur des Brennstoffzellensystems herbeigeführt hat, vorgenommen.

Eine besonders günstige Weiterbildung der Idee sieht es dabei vor, dass die Startvorbereitungsroutine nach dem erneuten Abkühlen auf den Temperaturgrenzwert erfolgt. Dies stellt sicher, dass ein Abstellen des Brennstoffzellensystems nach dem Erreichen der normalen Arbeitstemperatur und das erfindungsgemäße Verfahren hinsichtlich der Betriebseigenschaften des Brennstoffzellensystems und der Startvorbereitungsroutine praktisch identisch sind, sodass lediglich ein einziger Ablauf vorgehalten werden muss, und keine aufwändige Sensorik mit komplex zu erfassenden programmierbaren Werten, wie beispielsweise der Feuchtigkeit notwendig ist. Stattdessen reichen einfache und robuste Temperatursensoren aus, um die Startvorbereitungsroutine und bei Bedarf das erfindungsgemäße Verfahren, falls das Brennstoffzellensystem im vorhergegangenen Betrieb die normale Arbeitstemperatur nicht erreicht hatte, durchzuführen.

Die normale Arbeitstemperatur kann dabei bei Werten zwischen beispielsweise 60° C und 70° C, vorzugsweise ca. 65° C, vorgegeben werden, was einer üblichen Arbeitstemperatur bei PEM-Brennstoffzellen entspricht. Der Temperaturgrenzwert kann beispielsweise mit etwa 5° C bis 10° C vorgegeben werden, vorzugsweise mit ca. 5° C. Bei einer solchen Temperatur von etwa 5° C, welche im Inneren des Brennstoffzellensystems, und hier vorzugsweise im Bereich des Stacks, gemessen wird, kann davon ausgegangen werden, dass die Temperatur gegebenenfalls noch weiter abfällt und Temperaturen unterhalb des Gefrierpunkts auftreten. Das Durchführen einer Startvorbereitungsroutine ab einer solchen Grenztemperatur von 5° C ist also einigermaßen effizient, um einerseits alle Fälle zu erfassen, bei denen ein potenzielles Einfrieren des Brennstoffzellensystems droht und andererseits in den Fällen, in denen höhere Außentemperaturen vorliegen, diesen energetischen Aufwand eben nicht zu betreiben.

Die Startvorbereitungsroutine selbst kann beispielsweise in einer der aus dem Stand der Technik bekannten Arten durchgeführt werden, beispielsweise durch ein Spülen des Brennstoffzellensystems mit Luft und/oder Wasserstoff, ein Trocknen des Brennstoffzellensystems durch Beheizen und/oder Unterdruck oder auf ähnliche bekannte Art und Weise.

Weitere vorteilhafte Ausgestaltungen des erfindungsgemäßen Verfahrens ergeben sich auch aus den restlichen abhängigen Unteransprüchen und werden anhand des Ausführungsbeispiels deutlich, welches nachfolgend unter Bezugnahme auf die Figuren näher beschrieben ist.

Dabei zeigen:
- Fig. 1: ein Fahrzeug mit einem Brennstoffzellensystem, welches zur Durchführung des erfindungsgemäßen Verfahrens geeignet ist; und
- Fig. 2: ein Diagramm, welches das erfindungsgemäße Verfahren anhand eines Temperaturverlaufs T über der Zeit t beschreibt.

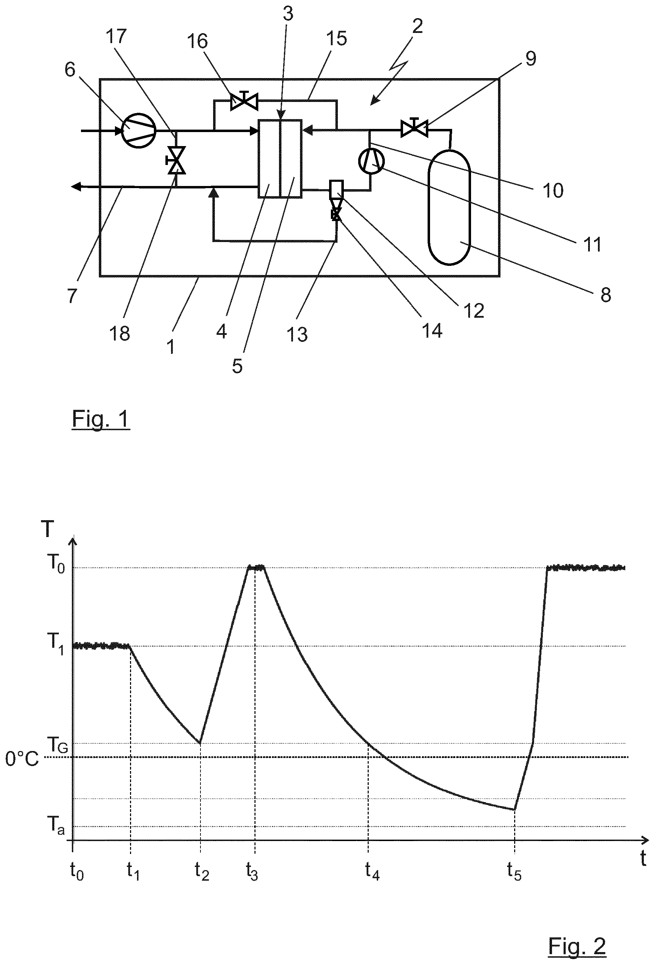

In der Darstellung der Figur 1 ist ein Fahrzeug 1 sehr stark schematisiert angedeutet. Das Fahrzeug 1 kann beispielsweise als Personenkraftwagen, Lastkraftwagen, als schienengebundenes Fahrzeug oder als Flurförderfahrzeug für Logistikzwecke ausgebildet sein. Genauso gut könnte das Fahrzeug 1 beispielsweise als Schiff oder Luftfahrzeug eingesetzt werden. In dem Fahrzeug 1 befindet sich ein prinzipmäßig angedeutetes Brennstoffzellensystem 2, dessen Kern eine Brennstoffzelle 3 bildet. Diese Brennstoffzelle 3 soll als Stapel von PEM-Einzelzellen aufgebaut sein, als sogenannter Brennstoffzellenstapel bzw. Brennstoffzellenstack. Symbolisch ist innerhalb der Brennstoffzelle 3 ein Kathodenraum 4 sowie ein Anodenraum 5 angedeutet. Dem Kathodenraum 4 wird für den regulären Betrieb Luft über eine Luftfördereinrichtung 6 als Sauerstofflieferant zugeführt. Abluft gelangt über eine Abluftleitung 7 aus dem Brennstoffzellensystem 2. Dem Anodenraum 5 der Brennstoffzelle 3 wird Wasserstoff aus einem Druckgasspeicher 8 über eine Druckregel- und Dosiereinheit 9 zugeführt. Nicht verbrauchter Wasserstoff sowie Inertgase und Wasser, welche im Bereich des Anodenraums 5 entstehen, werden über eine Rezirkulationsleitung 10 zurückgeführt und können vermischt mit frischem Wasserstoff dem Anodenraum 5 erneut zugeführt werden. In der Rezirkulationsleitung 10 ist dabei eine Rezirkulationsfördereinrichtung 11 angeordnet, welche in dem hier dargestellten Ausführungsbeispiel als Wasserstoffrezirkulationsgebläse bzw. HRB (Hydrogen Recirculation Blower) ausgebildet ist. Die Rezirkulationsfördereinrichtung 11 könnte dabei genauso gut als Gasstrahlpumpe oder als Kombination aus einer Gasstrahlpumpe und einem Gebläse realisiert sein. Außerdem befindet sich in der Rezirkulationsleitung 10 ein Wasserabscheider 12, welcher über eine Ablassleitung 13 mit einer Ventileinrichtung 14 mit der Abluftleitung 7 aus dem Brennstoffzellensystem 2 verbunden ist. Über den Wasserabscheider 12 und die Ventileinrichtung 14 kann so Wasser gesammelt und beispielsweise von Zeit zu Zeit abgelassen werden. Genauso gut ist es denkbar, das Wasser in Abhängigkeit eines Füllstands in dem Wasserabscheider oder in Abhängigkeit von Konzentrationen in dem sogenannten Anodenkreislauf abzulassen. Zusammen mit dem Wasser kann außerdem Gas mit abgelassen werden, da sich in dem Anodenkreislauf mit der Zeit Inertgas, welches durch die Membranen der Brennstoffzelle 3 vom Kathodenraum 4 in den Anodenraum 5 diffundiert ist, anreichert. Da hierdurch die Wasserstoffkonzentration in dem in seinem Volumen konstanten Anodenkreislauf sinken würde, muss dieses Gas ebenfalls mit abgelassen werden. Dies kann über eine eigene Leitung erfolgen oder zusammen mit dem Wasser über die Ablassleitung 13 und die Ventileinrichtung 14.

In der Darstellung der Figur 1 ist nun außerdem eine Verbindungsleitung 15 mit einer Ventileinrichtung 16 zu erkennen, welche den Anodenkreislauf mit einer Zuluftleitung 17 zu dem Kathodenraum 4 der Brennstoffzelle 3 verbindet. Über die Verbindungsleitung 15 kann bei geöffneter Ventileinrichtung 16 so eine Verbindung zwischen der Kathodenseite und der Anodenseite des Brennstoffzellensystems 2 geschaffen werden. Die Verbindungsleitung 15 kann je nach Anordnung und Ausführung beispielsweise auch dazu genutzt werden, parallel zum Ablassen von Wasser über den Wasserabscheider 12 und die Ablassleitung 13 das Gas abzulassen, wobei der Verzweigungspunkt dann typischerweise zwischen dem Wasserabscheider 12 und der Rezirkulationsfördereinrichtung 11 angeordnet wäre. Das Einleiten des abgeblasenen Gases in die Zuluftleitung 17 ist dabei allgemein bekannt und üblich, da so eventueller Wasserstoff, welcher typischerweise immer in kleinen Mengen mit abgelassen wird, am Katalysator des Kathodenraums 4 reagiert und Wasserstoffemissionen an die Umgebung so vermieden werden können.

Die Verbindungsleitung 15 mit der Ventileinrichtung 16 kann für den Fall, dass die Seite des Anodenraums 5 bei der Trocknung mit Wasserstoff durchspült wird, welcher dann mittels der durch den Kathodenraum 4 geförderten Luft bei der Abgabe in die Umgebung über die Abluftleitung 7 entsprechend verdünnt wird, auch entfallen.

Das Brennstoffzellensystem 2 in dem Fahrzeug 1 kann ferner einen sogenannten Systembypass 17 aufweisen, welcher die Druckseite der Luftfördereinrichtung 6 und die Abluftleitung 7 über ein Bypassventil 8 verbindbar macht. In der Abluftleitung 7 kann außerdem eine Abluftturbine (hier nicht dargestellt) angeordnet sein, welche mechanisch mit der Luftfördereinrichtung 6 und bevorzugt einer elektrischen Maschine als Motor/Generator oder auch nur mit einem Generator und über diesen elektrisch mit einem Motor für die Luftfördereinrichtung 7 verbunden sein kann. Ein solcher Aufbau ist ebenfalls aus dem allgemeinen Stand der Technik bekannt und wird als elektrischer Turbolader oder motorunterstützter Turbolader bezeichnet.

Eine Startvorbereitungsroutine wird nun in an sich bekannter Art und Weise mittels eines Durchspülens des Systems und/oder einer Trocknung des Systems durch Beheizung und/oder Unterdruck durchgeführt, sobald die Temperaturen, beispielsweise die Temperatur in der Umgebung oder insbesondere die Temperatur im Brennstoffzellensystem, und ganz besonders bevorzugt im Bereich des Brennstoffzellenstapels, also der Brennstoffzelle 3, unter einen vorgegebenen Temperaturgrenzwert von beispielsweise 5° C fällt.

Um sicherzustellen, dass mit einer standardisierten Startvorbereitungsroutine, welche weitgehend unabhängig von irgendwelchen Eingangsparametern auskommt und daher einfacher als im Stand der Technik aufgebaut ist, immer eine ausreichende Trocknung erfolgt, wird nun wie folgt vorgegangen. Der Verfahrensablauf lässt sich insbesondere in Figur 2 in dem Diagramm der Temperatur T über der Zeit t erkennen. Der erste Abschnitt zwischen der Zeitpinkt t₀ und der Zeitpunkt t₁ beschreibt einen normalen Betrieb, bei welchem die Betriebstemperatur T, welche vorzugsweise in einem Kühlwasserkreislauf des Brennstoffzellensystems 2 gemessen werden kann, da dort ohnehin Temperatursensoren verbaut sind, um einen Mittelwert T₁ schwankt. Der Temperaturwert soll beispielsweise während einer Kurzstreckenfahrt unter dem üblicherweise auftretenden Temperaturwert T₀, welcher im normalen Betrieb des Brennstoffzellensystems 2 bzw. des Fahrzeugs 1 auftritt, liegen. Er kann zum Beispiel 40% betragen. Zum Zeitpunkt t₁ wird der Fahrbetrieb beendet und das System heruntergefahren. Es kühlt dann bis zu einer Grenztemperatur T_{G} ab, welche minimal über dem Gefrierpunkt von Wasser, welcher hier mir einer 0° C-Linie eingezeichnet ist, liegt. Wird im Verlauf der Temperatur T, hier zum Zeitpunkt t₂, dieser Temperaturgrenzwert T_{G} erreicht, dann wird üblicherweise eine Startvorbereitungsroutine ausgelöst, um das Brennstoffzellensystem 2 zu trocknen, weil beim Erreichen der Grenztemperatur T_{G} davon ausgegangen werden muss, dass die Temperatur weiter abfällt und insbesondere unter den Gefrierpunkt von 0° C fällt. Ist der vorhergehende Betrieb des Brennstoffzellensystems 2 jedoch so gewesen, dass die normale Betriebstemperatur T₀ gar nicht erreicht worden ist, dann wird zum Zeitpunkt T₂ keine Startvorbereitungsroutine ausgelöst, sondern das Brennstoffzellensystem 2 wird während des Stillstands des Fahrzeugs 1 in Betrieb genommen. Es erwärmt sich dementsprechend bei diesem automatisierten Betrieb ausgehend von der Grenztemperatur T_{G}. Es wird so betrieben, dass es während der Betriebsphase zum Zeitpunkt t₃ für eine gewisse Zeit die normale Betriebstemperatur T₀ von beispielsweise 65° C erreicht. Danach wird das automatisiert gestartete Brennstoffzellensystem 2 automatisiert wieder gestoppt, die Abkühlung beginnt von neuem. Zum Zeitpunkt t₄ wird nun erneut die Grenztemperatur T_{G} von beispielsweise 5° C erreicht. Nun erfolgt die Abkühlung jedoch wie üblich vom normalen Temperaturniveau T₀ des Brennstoffzellensystems 2 aus. Zum Zeitpunkt t₄ startet also eine Systemvorbereitungsroutine, welche das Brennstoffzellensystem 2 entsprechend trocknet insbesondere durch eine oder mehrere der oben bereits beschriebenen und aus dem Stand der Technik bekannten Maßnahmen.

Im hier dargestellten Ausführungsbeispiel fällt die Temperatur danach noch weiter ab, insbesondere auf eine deutlich unter dem Gefrierpunkt liegende Temperatur zum Zeitpunkt t₅, welche nur minimal über der hier ebenfalls sehr niedrigen Umgebungstemperatur Tₐ liegt. Zum Zeitpunkt t₅ wird dann eine Gefrierstartroutine zum Starten des Brennstoffzellensystems 2 eingeleitet, in deren Zuge die Temperatur T relativ schnell wieder auf die normale Betriebstemperatur T₀ ansteigt und das Brennstoffzellensystem betriebsbereit ist. Dies ist aufgrund der zum Zeitpunkt t₄ gestarteten Startvorbereitungsroutine, welche das Brennstoffzellensystem 2 ausgetrocknet hat, problemlos möglich, da Blockaden durch Eis aufgrund der beschriebenen Vorgehensweise effizient verhindert werden können.

## Patentansprüche

1. Verfahren zur Startvorbereitung eines Brennstoffzellensystems (2) in einem Fahrzeug (1), wozu nach dem Abstellen des Fahrzeugs (1) in Abhängigkeit eines Temperaturgrenzwerts (T_{G}) eine Startvorbereitungsroutine durchgeführt wird, **dadurch gekennzeichnet, dass**
für den Fall, dass die Brennstoffzelle (3) während des vorhergegangenen Betriebs ihre normale Arbeitstemperatur (Tₒ) nicht erreicht hatte und eine Temperatur (T) unter den vorgegebenen Temperaturgrenzwert (T_{G}) fällt, das
Brennstoffzellensystem (2) betrieben wird, bis es seine normale Arbeitstemperatur (Tₒ) erreicht hat und wonach anschließend die Startvorbereitungsroutine durchgeführt wird.

2. Verfahren nach Anspruch 1,
**dadurch gekennzeichnet, dass**
die Startvorbereitungsroutine erst nach dem erneuten Abkühlen auf den Temperaturgrenzwert (T_{G}) erfolgt.

3. Verfahren nach Anspruch 1 oder 2,
**dadurch gekennzeichnet, dass**
die normale Arbeitstemperatur (Tₒ) bei 60° C bis 70° C vorgegeben wird.

4. Verfahren nach Anspruch 3,
**dadurch gekennzeichnet, dass**
die normale Arbeitstemperatur (Tₒ) bei ca. 65° C vorgegeben wird.

5. Verfahren nach einem der Ansprüche 1 bis 4,
**dadurch gekennzeichnet, dass**
der Temperaturgrenzwert (T_{G}) bei 0° C bis 10° C vorgegeben wird.

6. Verfahren nach Anspruch 5,
**dadurch gekennzeichnet, dass**
der Temperaturgrenzwert (T_{G}) bei 5° C, vorgegeben wird.

7. Verfahren nach einem der Ansprüche 1 bis 6,
**dadurch gekennzeichnet, dass**
die Temperatur (T) im Inneren des Brennstoffzellensystems (2) gemessen wird

8. Verfahren nach Anspruch 7,
**dadurch gekennzeichnet, dass**
die Temperatur (T) im Bereich der Brennstoffzelle und/oder des Kühlmittels für die Brennstoffzelle (3) gemessen wird.

## Claims

1. A method for preparing a fuel cell system (2) in a vehicle (1) for starting, for which purpose, after the vehicle (1) has been shut down, a starting preparation routine is carried out depending on a temperature limit value (T_{G}), **characterized in that**
in the event that the fuel cell (3) did not reach its normal operating temperature (T₀) during the previous operation and a temperature (T) falls below the predetermined temperature limit value (T_{G}), the fuel cell system (2) is operated until it has reached its normal operating temperature (To) and thereafter the starting preparation routine is subsequently carried out.

2. The method according to claim 1,
**characterized in that**
the starting preparation routine takes place only after cooling down again to the temperature limit value (T_{G}).

3. The method according to claim 1 or 2,
**characterized in that**
the normal operating temperature (T₀) is predetermined at 60° C to 70° C.

4. The method according to claim 3,
**characterized in that**
the normal operating temperature (To) is predetermined at approx. 65° C.

5. The method according to any one of claims 1 to 4,
**characterized in that**
the temperature limit value (T_{G}) is predetermined at 0° C to 10° C.

6. The method according to claim 5,
**characterized in that**
the temperature limit value (T_{G}) is predetermined at 5° C.

7. The method according to any one of claims 1 to 6,
**characterized in that**
the temperature (T) is measured inside the fuel cell system (2) .

8. The method according to claim 7,
**characterized in that**
the temperature (T) is measured in the region of the fuel cell and/or of the coolant for the fuel cell (3).

## Revendications

1. Procédé de préparation au démarrage d'un système de pile à combustible (2) dans un véhicule (1), pour quoi après l'arrêt du véhicule (1) en fonction d'une valeur limite de température (T_{G}), une routine de préparation au démarrage est réalisée,
**caractérisé en ce que**
dans le cas où la pile à combustible (3) pendant le fonctionnement précédent n'avait pas atteint sa température de travail normale (To) et une température (T) tombe sous la valeur limite de température (T_{G}) prédéfinie, le système de pile à combustible (2) est actionné jusqu'à ce qu'il ait atteint sa température de travail normale (To) et après quoi la routine de préparation au démarrage est ensuite réalisée.

2. Procédé selon la revendication 1,
**caractérisé en ce que**
la routine de préparation au démarrage n'est effectuée qu'après le nouveau refroidissement à la valeur limite de température (T_{G}).

3. Procédé selon la revendication 1 ou 2,
**caractérisé en ce que**
la température de travail normale (To) est prédéfinie de 60 °C jusqu'à 70 °C.

4. Procédé selon la revendication 3,
**caractérisé en ce que**
la température de travail normale (To) est prédéfinie à environ 65 °C.

5. Procédé selon l'une quelconque des revendications 1 à 4,
**caractérisé en ce que**
la valeur limite de température (T_{G}) est prédéfinie de 0 °C jusqu'à 10 °C.

6. Procédé selon la revendication 5,
**caractérisé en ce que**
la valeur limite de température (T_{G}) est prédéfinie à 5 °C.

7. Procédé selon l'une quelconque des revendications 1 à 6,
**caractérisé en ce que**
la température (T) est mesurée à l'intérieur du système de pile à combustible (2).

8. Procédé selon la revendication 7,
**caractérisé en ce que**
la température (T) est mesurée dans la zone de la pile à combustible et/ou du moyen de refroidissement pour la pile à combustible (3).
